Europäisches Patentamt

European Patent Office

Office européen des brevets

(11) Veröffentlichungsnummer: **0 062 758**
**B1**

# (12) EUROPÄISCHE PATENTSCHRIFT

(45) Veröffentlichungstag der Patentschrift:
05.12.84

(51) Int. Cl.³: **H 04 N 5/34**

(21) Anmeldenummer: **82101734.0**

(22) Anmeldetag: **05.03.82**

(54) Schaltung zur Strahlstromstabilisierung von Fernsehaufnahmeröhren.

(30) Priorität: **09.04.81 DE 3114274**

(43) Veröffentlichungstag der Anmeldung:
**20.10.82 Patentblatt 82/42**

(45) Bekanntmachung des Hinweises auf die Patenterteilung:
**05.12.84 Patentblatt 84/49**

(84) Benannte Vertragsstaaten:
**DE FR GB NL**

(56) Entgegenhaltungen:
**DE - A - 2 411 162**
**DE - A - 2 853 456**
**DE - A - 3 030 860**

(73) Patentinhaber: **ROBERT BOSCH GMBH,
Robert-Bosch-Strasse 7 Postfach 429, D-6100 Darmstadt
(DE)**

(72) Erfinder: **Gehrmann, Rainer, Am Grenzweg 18,
D-6146 Alsbach-Hähnlein 1 (DE)**
Erfinder: **Zettl, Herbert, Wolfkehlstrasse 28,
D-6081 Erfelden (DE)**

(74) Vertreter: **Gornott, Dietmar, Dipl.-Ing., c/o Robert-Bosch
GmbH Postfach 429 Robert-Bosch-Strasse 7,
D-6100 Darmstadt (DE)**

## Beschreibung

### Stand der Technik

Die Erfindung geht aus von einer Schaltung zur Strahlstromstabilisierung mit Kompensation von Spitzlichtern in einer Fernsehaufnahmeröhre vom Diode-Gun-Typ. Bei den seit kurzer Zeit bekanntgewordenen sogenannten Diode-Gun-Aufnahmeröhren wird an die Steuerelektrode ein gegenüber dem Kathodenpotential positives Vorspannungspotential gelegt, so dass hierbei über die Steuerelektrode ein Strom fliesst. Diese Aufnahmeröhren zeigen gegenüber den bisher benutzten eine erhöhte Auflösung. Zur Stabilisierung des in der Aufnahmeröhre fliessenden Strahlstromes ist es wichtig, dass in Abhängigkeit vom Röhrenexemplar, dem Alter der Röhre und der auf die Signalelektrode auftreffenden Lichtmenge ein bestimmter Kathodenstrom mit Hilfe der Spannung an der Steuerelektrode eingestellt wird, wobei der Zusammenhang zwischen Kathodenstrom und Steuerelektrodenspannung nichtlinear ist und der Zusammenhang zwischen Kathodenstrom und Strahlstrom als proportional angenommen werden kann.

Aus der DE-A1-3 010 812 ist zwar schon eine Regelschaltungsanordnung zur Regelung des Strahlstroms in einer Kamera-Bildaufnahmeröhre und ein Verfahren zur Unterdrückung von im Videosignalstrom einer Videokamera auftretenden Hellstellen bekannt. Hierbei ist jedoch weder eine Langzeitstabilisierung, z.B. wegen Röhrenalterung, noch eine Begrenzung von Überströmen bei der Neutralisierung von Spitzlichtern auf der Signalelektrode vorgesehen. Dadurch kann sich der Strahlstrom ebenso wie der Kathodenstrom im Laufe des Betriebes verändern, so dass die Signalelektrode beispielsweise nur ungenügend entladen wird. Ausserdem kann die Aufnahmeröhre bei sehr grossen Spitzlichtern oder Hellstellen leicht beschädigt werden.

Durch die DE-A1-2 863 456 ist ferner eine Steuerschaltung für eine Bildaufnahmeröhre bekannt, wobei ein in Abhängigkeit vom Kathodenstrom und einem Referenzsignal bzw. einem vom Videosignalstrom abgeleiteten Signal gesteuerter, das Steuerelektrodenpotential abgebender Differenzverstärker vorgesehen ist. Diese bekannte Schaltung eignet sich jedoch nur für die Steuerung von Aufnahmeröhren mit einem Triodensystem und lässt sich nicht ohne weiteres für Diode-Gun-Röhren anwenden.

In der DE-A1-3 030 860 ist weiterhin eine Schaltung zur Strahlstromstabilisierung in einer Fernsehaufnahmeröhre vom Diode-Gun-Typ angegeben, welche eine Einrichtung zur Regelung des Steuerelektrodenpotentials in Abhängigkeit von Signalen, die der Differenz zwischen einem Strahlstrom und einem Bezugssignal entsprechen und eine Signalgeneratorschaltung enthält, die ein Signal liefert, das dem Strahlüberstrom unter Berücksichtigung eines Signalstromes, des Kathodenstromes und des Steuerstromes über die Steuerelektrode entspricht. Bei dieser bekannten Schaltung ist jedoch weder eine Schaltung zur Begrenzung des Strahlstromes noch eine Schwellwertschaltung für den Einsatzpunkt der Steuerwirkung zur Kompensation vorhandener Spitzlichter vorgesehen. Das Fehlen einer Begrenzung hat den Nachteil, dass die vorgeschriebenen Grenzdaten für Spitzenströme der Aufnahmeröhre nicht eingehalten werden können, so dass es leicht zur Beschädigung der Röhre bzw. zu Schwingungen kommen kann. Durch die nicht vorhandene Schwellwertschaltung kann das erzeugte Videosignal bei vorzeitiger Auftastung negativ beeinflusst werden, z.B. hinsichtlich Auflösung, Flankenverhalten und dergleichen.

Der vorliegenden Erfindung liegt daher die Aufgabe zugrunde, die genannte Nichtlinearität zu eliminieren und in jedem Fall eine genaue Kontrolle über den Kathodenstrom zu haben.

### Vorteile der Erfindung

Die erfindungsgemässe Schaltung mit den kennzeichnenden Merkmalen des Hauptanspruchs hat den Vorteil, dass bei normaler Belichtung der Signalelektrode der Fernsehaufnahmeröhre ein bestimmter Kathodenstrom fliesst, der bei Auftreten von Spitzlichtern nur bis zu einem einstellbaren Schwellwert erhöht wird, so dass sowohl eine Beschädigung der Aufnahmeröhre als auch ein störendes Überschwingen sicher vermieden wird.

### Zeichnung

Ein Ausführungsbeispiel der Erfindung ist in der Zeichnung dargestellt und in der nachfolgenden Beschreibung näher erläutert. Es zeigen:

Fig. 1 ein Blockschaltbild der erfindungsgemässen Schaltung,

Fig. 2 ein Videosignal/Kathodenstrom-Diagramm für zwei verschiedene Aufnahmeröhren.

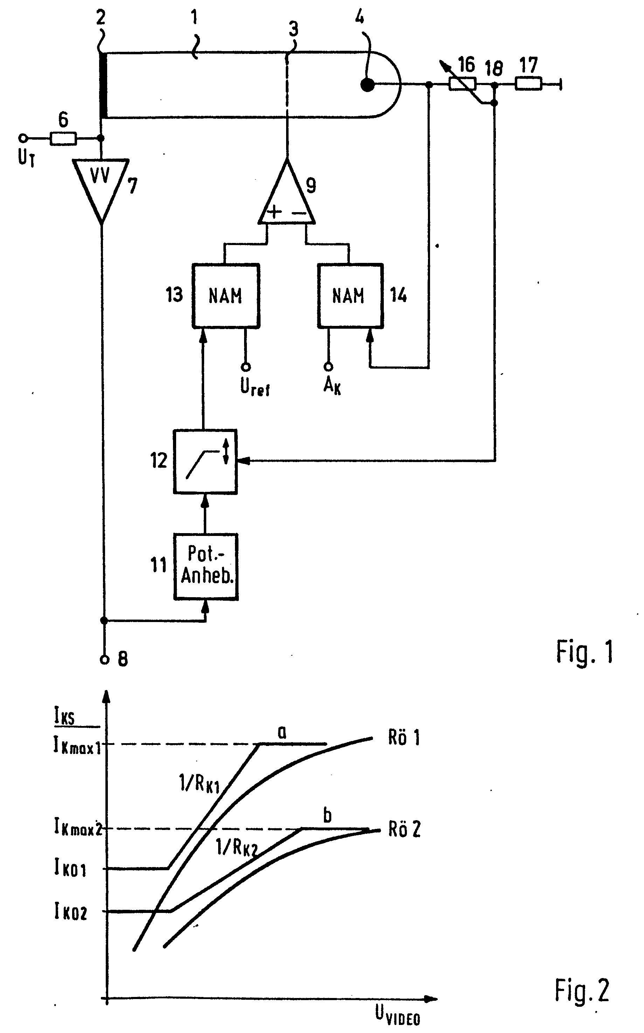

Im Blockkschaltbild gemäss Fig. 1 ist eine Fernsehaufnahmeröhre 1 vom Diode-Gun-Typ mit einer Signalelektrode 2, einer Steuerelektrode 3 und einer Kathode 4 dargestellt. Der in der Röhre 1 von der Kathode 4 zur Signalelektrode 2 fliessende Strahlstrom wird mit Hilfe eines an die Steuerelektrode 3 angelegten Potentials in seiner Stärke gesteuert. Die Signalelektrode 2 ist einerseits über einen Widerstand 6 an eine Betriebsspannungsquelle $U_T$ und andererseits an den Eingang eines Vorverstärkers 7 angeschlossen. Am Ausgang des Verstäkers 7 ist ein Videosignal abnehmbar, welches über Klemme 8 den (in der Fig. 1 nicht dargestellten) weiteren Verarbeitungsschaltungen in der Fernsehkamera und der Strahlstrom-Steuerschaltung zugeführt wird.

Die Strahlstrom-Steuerschaltung besteht im wesentlichen aus einem Differenzverstärker 9, an dessen nichtintervertierendem Eingang ein vom Videosignalstrom abgeleitetes Signal und an dessen invertierendem Eingang ein vom Kathodenstrom abgeleitetes Potential anliegt. Am Ausgang des Differenzverstärkers 9 ist das Steuerelektroden-Potential für die Steuerelektrode 3 abnehmbar. Zwischen dem Ausgang des Verstärkers 7 und dem nichtinvertierenden Eingang des Verstärkers 9 ist eine Schaltung 11 zur Potentialanhebung, eine einstellbare Begrenzerschaltung 12 sowie eine Nicht-Additive-Misch-Schaltung 13 angeordnet. Der Schaltung 13 wird ausser dem vom Videosignal abgeleiteten Signal ein Referenzsignal $U_{ref}$ zugeführt. Am invertierenden Eingang des Verstärkers 9 ist eine weitere Nicht-Additive-Misch-Schaltung 14 vorgesehen, deren erster Eingang direkt mit der Kathode 4 verbunden ist und an deren zweiten Eingang Austastimpulse $A_K$ anliegen. Zwischen Kathode 4 und Bezugspotential ist ein Kathodenwiderstand angeordnet, welcher aus zwei Teilwiderständen 16 und 17 besteht. Hierbei ist der Teilwiderstand 16 einstellbar. Der Verbindungspunkt 18 der beiden Widerstände 16 und 17 ist mit dem Steuereingang der Begrenzerschaltung 12 verbunden.

Der vom Kathodenstrom $I_{KS}$ (Fig. 2) abgeleitete Strahlstrom wird normalerweise so eingestellt, dass er Ladungen auf der Signalelektrode 2 neutralisieren kann, die etwa doppelt so hoch sind wie einem 100%-Videosignalpegel entspricht. Grössere Lichtpegel können nur dann verarbeitet werden, wenn gleichzeitig der Strahlstrom erhöht wird. Das notwendige Mass der Erhöhung hängt von der Grösse des Lichtüberpegels ab.

Für das Abtasten eines Spitzlichtbereiches ist es notwendig, dass einerseits der Strahlstrom auf Werte aufgetastet wird, die immer eine gewisse Reserve an Strom bieten, aber andererseits die Erhöhung in Grenzen bleibt. Eine zu starke Erhöhung des Strahlstromes lässt den Strahl auswandern und damit Neutralisierung in Nachbarbereichen vorwegnehmen. Wegen dieser Vorwegnahme fällt das Videosignal dann zurück bis zum erneuten Auftasten, wodurch es zu einem Schwingen kommen kann.

Es kommt also darauf an, die Aufnahmeröhre mit einer Steuerkennlinie a bzw. b zu betreiben, die etwas oberhalb der Röhrenkennlinie Rö 1 bzw. Rö 2 liegt, welche den Zusammenhang zwischen Videosignal $U_{VIDEO}$ und dem notwendigen Mindeststrahlstrom bzw. wegen der Proportionalität dem Mindestkathodenstrom $I_{KS}$ darstellt. Da es für die Konstanthaltung der notwendigen Strahlstromreserve keine Regelgrösse gibt, muss der Strom gesteuert werden.

Eine gute Steuerkennlinie a bzw. b lässt sich besser realisieren, wenn man die Nichtlinearität zwischen der Spannung an der Steuerelektrode 3 und dem Kathodenstrom ausschaltet durch direkte Kontrolle des Kathodenstromes selbst. Dennoch muss wegen der Exemplarabhängigkeit der Aufnahmeröhren die Steuerkennlinie a bzw. b der jeweiligen Röhrenkennlinie Rö 1 bzw. Rö 2 angepasst werden.

Bei normalen Videosignalpegeln kann dies dadurch erreicht werden, dass der Strahlstrom für die jeweilige Aufnahmeröhre mit Hilfe des veränderlichen Widerstandes 16 bei fest vorgegebenem Referenzsignal $U_{ref}$ eingestellt wird (in Fig. 2 $I_{KO1}$ bzw. $I_{KO2}$). Bei Veränderung des Wertes des Widerstandes 16 wird nun nicht nur der Strahlstrom bzw. Kathodenstrom für Normalpegel ($I_{KO}$), sondern gleichzeitig auch durch die Verknüpfung des Referenzsignals $U_{ref}$ mit dem vom Videosignal abgeleiteten Signal über die Nicht-Additive-Misch-Schaltung 13 bei Erhöhung des Signals durch Spitzlichter die Steigerung der Widerstandsgeraden $1/R_K$ bezüglich der entsprechenden Röhrenkennlinie eingestellt.

Beim Abtasten eines Spitzlichtbereiches zeigt sich zu Beginn der Auftastphase des Strahlstromes, dass das Videosignal und in Zusammenhang damit auch der Kathodenstrom übermässig stark zunehmen. Diese überschiessende Spitze steht im Zusammenhang einerseits mit der positiven Steuerung des Kathodenstromes durch das Videosignal über die Steuerkennlinie und andererseits mit der Erhöhung des Videosignals über seinen eigentlichen Pegel hinaus bei Erhöhung des Strahlstromes durch Aufweiten und Auswandern des Abtastflecks auf der Signalelektrode 2.

Um ein allzu starkes Überschiessen und infolgedessen eine Schwingneigung für gewisse Spitzlichtpegel zu vermeiden, muss der Strahlstrom nach oben hin ebenfalls abhängig vom Röhrenexemplar zusätzlich begrenzt werden. Dies ist durch die in Abhängigkeit vom Kathodenpotential am Punkt 18 gesteuerte Begrenzerschaltung 12 möglich, deren Schwellwert ausserdem noch einstellbar ist.

Am Ausgang der Schaltung 12 ist daher ein vom Videosignal abgeleitetes, durch die Potentialanhebeschaltung 12 auf das Niveau des Referenzsignals angehobenes und durch den Schwellwert des Begrenzers 12 begrenztes Signal abnehmbar. Dieses Signal wird in der Nicht-Additiven-Misch-Schaltung 13 mit dem Referenzsignal $U_{ref}$ verglichen, wodurch nur dann ein vom Videosignal abhängiges Signal an den nichtinvertierenden Eingang des Differenzverstärkers 9 abgegeben wird, wenn dieses Signal das Referenzsignal $U_{ref}$ übersteigt.

In der weiteren Nicht-Additiven-Misch-Schaltung 14 wird des Kathodenpotential mit der anliegenden Austastimpulsfolge $A_K$ verglichen, so dass immer dann ein Austast-Impuls am invertierenden Eingang des Differenzverstärkers 9 entsteht, wenn das Kathodenpotential überschritten wird.

Der Differenzverstärker 9 gibt somit eine solche Steuerspannung für die Steuerelektrode 3 der Aufnahmeröhre 1 ab, dass der Strahlstrom der Geraden $1/R_K$ in Fig. 2 folgt, wodurch eine optimale Strahlstromsteuerung für jede Röhre möglich ist.


## Patentansprüche

1. Schaltung zur Strahlstromstabilisierung mit Kompensation von Spitzlichtern in einer Fernsehaufnahmeröhre vom Diode-Gun-Typ, gekennzeichnet durch die Kombination folgender, teilweise für sich bekannter Merkmale:

a) ein in Abhängigkeit vom Kathodenstrom und einem Referenzsignal ($U_{ref}$) bzw. einem vom Videosignalstrom abgeleiteten Signal gesteuerter, das Steuerelektrodenpotential abgebender Differenzverstärker (9),

b) eine Nicht-Additive-Misch-Schaltung (13) zur Abgabe des Referenzsignals ($U_{ref}$) bzw. des vom Videosignalstrom abgeleiteten Signals bei über dem Referenzsignal ($U_{ref}$) liegenden, durch Spitzlichter hervorgerufenen Pegeln,

c) eine weitere Nicht-Additive-Misch-Schaltung (14) zur Abgabe des vom Kathodenstrom abgeleiteten Potentials bzw. von Austastimpulsen ($A_K$),

d) eine von einem Kathodenteilpotential gesteuerte und in ihrem Schwellwert einstellbare Begrenzerschaltung (12) zur Begrenzung der Amplitude des vom Videosignalstrom abgeleiteten Signals,

c) eine Potentialanhebeschaltung (11) zur Anhebung des vom Videosignalstrom abgeleiteten Signals auf den Bereich des Referenzsignalpotentials ($U_{ref}$).

2. Schaltung nach Anspruch 1, dadurch gekennzeichnet, dass der Kathodenwiderstand der Fernsehaufnahmeröhre (1) aus zwei Teilwiderständen (16, 17) besteht, von denen der eine (16) einstellbar ist.

## Claims

1. Circuit for cathode ray current stabilization with compensation of highlights in a camera tube of the diode gun type, characterized by a combination of the following, in part per se known features:
   a) a differential amplifier (9) controlled as a function of a cathode current and a reference signal ($U_{ref}$) or a signal derived from the video signal current, and which supplies the control electrode potential,
   b) a non-additive mixer circuit (13) for supplying the reference signal ($U_{ref}$) or the signal derived from the video signal current in the case of levels caused by highlights and which are above the reference signal ($U_{ref}$),
   c) a further non-additive mixer circuit (14) for supplying the potential derived from the cathode current for blanking pulses ($A_K$),
   d) a limiting circuit (12) controlled by a cathode partial potential and whose threshold value is adjustable, for limiting the amplitude of the signal derived from the video signal current,
   e) a potential raising circuit (11) for raising the signal derived from the video signal current to the range of the reference signal potential ($U_{ref}$).

2. Circuit according to claim 1, characterized in that the cathode resistor of the camera tube (1) comprises two partial resistors (16, 17), whereof one (16) is adjustable.

## Revendications

1. Circuit pour la stabilisation de courant de faisceau avec compensation de plages à luminence éle-vée dans un tube de prise de vue de télévision du type diode gun, circuit caractérisé par la combinaison des caractéristiques suivantes partiellement connues en soi:
   a) un amplificateur différentiel (9) qui, en étant commandé en fonction du courant de cathode et d'un signal de référence ($U_{ref}$); ou bien d'un signal dérivé du courant de signal vidéo, fournit le potentiel d'électrode de commande,
   b) un circuit mélangeur non additif (13) pour fournir le signal de référence ($U_{ref}$) ou bien le signal dérivé du courant du signal vidéo pour des niveaux se situant au-dessus du signal de référence ($U_{ref}$) et dûs aux plages à luminence élevée,
   c) un autre circuit mélangeur non additif (14) pour fournier le potentiel dérivé du courant de cathode ou bien des impulsions de suppression ($A_K$),
   d) un circuit limiteur (12) commandé par un potentiel de cathode et dont la valeur de seuil peut être réglée, pour limiter l'amplitude du signal dérivé du courant du signal vidéo,
   e) un circuit d'accentuation de potentiel (11) pour élever le signal dérivé du courant du signal vidéo au voisinage du potentiel du signal de référence ($U_{ref}$).

2. Circuit selon la revendication 1, caractérisé en ce que la résistance de cathode du tube de prise de vue de télévision (1) est constituée de deux résistances partielles (16, 17), dont l'une (16) est réglable.

0 062 758

Fig. 1

Fig. 2